# EUROPEAN PATENT APPLICATION

(11) **EP 2 698 187 A1**
(43) Date of publication of application: **19.02.2014**
(21) Application number: 12180718.4
(22) Date of filing: 16.08.2012
(51) Int. Cl.: B01D 27/00, B01D 35/30

(54) **Liquid treatment cartridge and method of manufacturing thereof**

(71) Applicant: Brita Professional GmbH & Co. KG, 65232 Taunusstein (DE)
(72) Inventor: Nagel, Thomas, 35796 Weinbach (DE)
(74) Representative: van Lookeren Campagne, Constantijn August

(57) **Abstract**

A liquid treatment cartridge for removable connection to a filter head assembly has at least one liquid inlet (11,12) and at least one liquid outlet for connection to the filter head assembly (1) at one axial end thereof, relative to a body axis (9) of the liquid treatment cartridge. The liquid treatment cartridge includes a housing including a middle part including a part (17) forming a wall closed on itself around the body axis (9) to delimit at least part of a cartridge chamber. The housing further includes a first end part (10;18;22). The first end part (10;18;22) and the middle part are discrete housing components sealingly joined at a first axial end (20;24) of the middle part. The housing further includes a second end part (27;32) at least partially closing off the cartridge chamber at a second axial end (28) of the middle part opposite the first end (20;24). The middle part and the second end part (27;32) are discrete housing components sealingly joined at the second axial end (28) of the middle part.

## Description

The invention relates to a liquid treatment cartridge for removable connection to a filter head assembly, the cartridge having at least one liquid inlet and at least one liquid outlet for connection to the filter head assembly at one axial end of the liquid treatment cartridge, relative to a body axis of the liquid treatment cartridge,
wherein the liquid treatment cartridge includes a housing including:
a middle part including a part forming a wall closed on itself around the body axis to delimit at least part of a cartridge chamber,
a first end part, wherein the first end part and the middle part are discrete housing components sealingly joined at a first axial end of the middle part; and
a second end part at least partially closing off the cartridge chamber at a second axial end of the middle part opposite the first end.

The invention also relates to a set of such liquid treatment cartridges.

The invention also relates to a liquid treatment system.

The invention also relates to a method of manufacturing a liquid treatment cartridge for removable connection to a filter head assembly, the cartridge having at least one liquid inlet and at least one liquid outlet for connection to the filter head assembly at one axial end thereof, relative to a body axis of the liquid treatment cartridge,
wherein a housing of the liquid treatment cartridge is made by at least:
providing a middle part including a part forming a wall closed on itself around the body axis to delimit at least part of a cartridge chamber;
providing a first end part, separate from the middle part; and
sealingly joining the first end part to the middle part at a first axial end of the middle part.

US 4,877,521 discloses a filtering device which includes firstly a head which is intended to be permanently installed in a machine, and secondly a replaceable filter canister, which can be mounted by hand and without tools in the head. An embodiment of the canister comprises a main housing, a bed of activated charcoal surrounding a tube, permeable filter inlet means and a housing cover. The housing cover contains diametrically opposed tabs and a neck, which contains two radially extending opening and an axial opening. An upper part of the tube is bonded centrally to the interior of the neck proximate to the axial opening. The cover is bonded to the main housing by induction welding of a fusible substance to both the cover and the main housing. The neck of the housing contains a bore adapted to be shrink-fit bonded to the tube. Inward of the radially extending openings are four innermost longitudinally-extending slots which serve as passageways between the radially extending openings and an annular clearance between a peripheral wall of the neck and the tube. Water directed at the radially extending openings flows through slots into the clearance and thence into permeable filter inlet means. Filtered water from the activated carbon is discharged from the canister through the axial opening. The head and canister are preferably constructed of moulded plastic material, and the disposable canister is generally bottle-shaped.

A problem of the known canister construction is that it requires a mould for each size and type of housing. As a consequence, a manufacturer will limit the range of different capacities of liquid treatment cartridges offered and the ways in which they can be handled, because each type requires its own mould.

It is an object of the invention to provide a liquid treatment cartridge, set of liquid treatment cartridges, liquid treatment system and method of manufacturing a liquid treatment cartridge that allow liquid treatment systems with different capacities or cartridge handling functionalities to be provided in a cost-efficient manner.

This object is achieved according to a first aspect by the liquid treatment cartridge according to the invention, which is characterised in that the middle part and the second end part are discrete housing components sealingly joined at an axial end of the middle part opposite the first axial end.

The liquid treatment cartridge is configured for removable connection to a filter head assembly, thus forming a replaceable component of a liquid treatment system further comprising the filter head assembly. The latter includes couplers for connection to conduits carrying the liquid to be treated to the liquid treatment system and the treated liquid from the liquid treatment system to an appliance or dispensing valve. The filter head assembly is generally designed to remain connected to these conduits, whereas the liquid treatment cartridge is easily removed to be replaced by a new one when the capacity of liquid treatment medium held in the cartridge housing is exhausted or the flow resistance of a mechanical filter medium inside the housing has increased too much. The cartridge is of a type having at least one liquid inlet and at least one liquid outlet for connection to the filter head assembly at one and the same axial end thereof, this being the end configured to mate with the filter head assembly. Because the inlet and outlet are at the same end, the filter head assembly can be relatively small, there being only one part designed to mate with the liquid treatment cartridge to establish an essentially fluid-tight coupling. As a consequence, the length of the cartridge is not dictated by the part with which it is designed to be coupled. Thus, one type of filter head assembly can be used to form liquid treatment systems with different capacities, the capacity being essentially determined by the length of the liquid treatment cartridge. The middle part includes a wall closed on itself around the body axis. It essentially provides the side wall or walls of the cartridge housing, with the length as measured along the body axis determining the capacity of the liquid treatment cartridge. The first end part is a discrete component, in the sense that there is a discernible boundary between it and the middle part, even if the two are welded or otherwise fused together. The first end part supports the inlet and outlet ports and a mechanical interface for releasably engaging the filter head assembly. This part should fit the filter head assembly, so that it is the same across a range of different liquid treatment cartridges. Where it is a moulded part, only one mould is required for this part. There can be many differently sized middle parts, to manufacture liquid treatment cartridges with different capacities, each tailored to a particular use. This avoids having to replace the cartridge often, if the capacity is too low for the use to which the liquid treatment system is used. It also avoids having the liquid treatment cartridge installed for a very long time, which could lead to microbiological contamination in the case liquids such as water or other types of potable liquid. Not only is it possible to have different sizes of liquid treatment cartridge housing, but there can also be different handling functionalities for a given capacity, because the second end part, at the opposite axial end of the middle part, is also a distinct housing component sealingly joined to the middle part. Thus, for the same capacity, i.e. middle part, there can be different second end parts, e.g. one with a handle and one with a pedestal for supporting the liquid treatment cartridge. Because there is both an inlet and an outlet at the other end, there is a relatively large freedom of design of the second end part.

In an embodiment, in at least one axial end section of the wall, any change in radial distance of the wall to the body axis in axial direction is uniform along its circumference.

This type of shape can be obtained by cutting the wall to size. The wall itself has no flange at this end, as implied by the fact that any change in radial distance of the wall to the body axis is uniform along its circumference. It is therefore not necessary to mould the wall. Where the wall constitutes the middle part, the entire middle part is relatively easy to produce.

In an embodiment, a cross-section of at least one axial end section of the wall is essentially invariant in axial direction.

Where this end section is joined directly to one of the first and second end parts, it is possible to change the length of the wall by cutting off a section of a precursor part without affecting the radial dimensions at this axial end of the middle part. Therefore, the same end part can be used for middle parts of different length. Where an intermediate part is used to connect the wall to the end part concerned, only one type of intermediate part is required. It is thus possible to manufacture liquid treatment cartridges in a wider range of different capacities economically.

In a variant, the cross-section of the wall is essentially invariant in axial direction along its length.

In this variant, any length of wall can be used, since it can be cut from a longer part (essentially a tube). The ends will have the same diameter, so that they can always be joined to first and second end parts of a single size directly or via intermediate parts of a single size.

In a variant, the wall-forming part is obtainable from a piece of extruded stock.

This variant can be manufactured relatively economically. The piece of stock can be relatively long. Many wall parts can be cut from it before a final section that is too short and has to be discarded is left over. The amount of discarded material is therefore relatively low.

In an embodiment, the wall has a round, in particular circular, cross-section.

This embodiment is suitable for withstanding relatively high pressures in the cartridge chamber. Because the inlets and outlets are at one end, there is a tendency for the pressure level inside the cartridge chamber to be relatively high. By optimising the shape, the risk of rupture is reduced without having to increase the wall thickness.

In an embodiment, at least one of the ends of the middle part is received in a socket of a respective one of the first and second end parts.

This embodiment addresses the problem of joining the middle part to the first or second end part. The fact that it is insertable into a socket means that the middle part need not be provided with flanges. This allows at least this end of the middle part to be formed by the end of an essentially tubular wall, without any intermediate part. The socket increases the contact area for the joint, enabling the liquid treatment cartridge to withstand higher pressure levels inside the cartridge chamber. Moreover, a better liquid-tight seal is provided.

In an embodiment, the middle part is joined to at least one of the first and second end parts by means of a positive material joint.

A positive material joint is a joint in which materials of the end part and middle part, and optionally an adhesive or filler material, are coalesced. This type of joint is also called a bond. The embodiment is relatively easy to manufacture, since the middle part and end part need not be provided with screw threads or other features to provide a shape-lock. In a variant of this embodiment, the joint is a welded joint, more particularly an ultrasonically welded joint. This variant is suitable for cartridges for treating potable liquids, since it does away with the need to use food-grade adhesives, of which only a limited number exist.

In an embodiment, at least one axial end of the middle part is formed by an axial end of the wall-forming part.

As a consequence, the wall is joined directly to the first or second end part without any intermediate parts. Thus, a relatively wide range of sizes of liquid treatment cartridges with a range of different handling functionalities can be manufactured relatively economically.

In a particular variant, the wall-forming part constitutes the middle part, so that the cartridge housing is formed essentially by the wall, the first end part and the second end part. This variant has a relatively low number of parts.

In an embodiment, the second end part comprises a single monolithic part closing off the cartridge chamber at the second end of the middle part.

This embodiment has a relatively low number of parts and a relatively low number of joints. Thus, it is both economical to manufacture and presents a relatively low risk of leakage. The second end part can be moulded, in particular injection-moulded.

In an embodiment, the second end part is provided with a concave inner surface facing the cartridge chamber.

This embodiment is able to withstand high pressures in the cartridge chamber relatively well. Minimal reinforcements are required and there are few, if any, locations with increased risk of rupture.

In an embodiment, the second end part is provided with at least one of a handle and a ring.

The first end part is inserted into the filter head assembly. Generally, this will be a tight fit, increased by the use of sealing elements. Because the inlets and outlets are provided at this one end, the second end part can have features such as the handle or the ring on an outward-facing side thereof. A user can pull the cartridge out of the filter head assembly by the handle or ring, making the liquid treatment cartridge easier to handle.

In an embodiment, the second end part is at least partly shaped as a pedestal providing a support surface in a plane perpendicular to the body axis, for supporting the liquid treatment cartridge on an external support surface.

This embodiment does not require the liquid treatment cartridge to be suspended from the filter head assembly. The liquid treatment cartridge can thus be made relatively large. The conduits supplying untreated liquid from an external source to the filter head assembly and carrying the treated liquid from the filter head assembly to an apparatus for processing the treated liquid can be flexible, so that it is the liquid treatment cartridge that supports the filter head assembly in this embodiment.

In an embodiment, the first end part includes a single monolithic component closing off the cartridge chamber but for openings of the at least one liquid inlet and the at least one liquid outlet at one axial end of the liquid treatment cartridge.

This embodiment is relatively economical to manufacture, since the first end part has relatively few parts. Moreover, relatively few parts need be joined together, which reduces the risk of leakage.

In an embodiment, the first end part includes a single monolithic component of which at least a part extending radially at least as far as a circumference of the first axial end of the middle part is shaped as a corresponding section of a dome.

This embodiment is able to withstand high pressure levels inside the cartridge chamber relatively well. Moreover, the filter head assembly can be relatively compact. The dome-shaped part can be situated outside the filter head assembly, in use, since the filter head assembly need not reinforce this part. Consequently, the same filter head assembly can be used with cartridges with different diameters. Because the part extends radially at least as far as a circumference of the first axial end of the middle part and is otherwise monolithic (i.e. obtained by forming, e.g. cast, in one piece), the joint connecting to the middle part is relatively long and thus has a relatively large contact surface.

In a variant, the at least one liquid inlet and the at least one liquid outlet are provided in at least one part of the first end part protruding from the dome-shaped part.

This protruding part or these protruding parts are for insertion into a cavity or cavities of the filter head assembly. They are thus reinforced by the filter head assembly in use. Thus, the only part with through-holes is a part that is externally supported, in use.

In a particular variant, the single monolithic part includes at least a main part of each protruding part.

This makes the first end part more economical to manufacture and reduces the number of joints. Other parts than the main part are merely parts made of a different material (such as sealing elements) or parts journalled to the main part.

According to another aspect of the invention, there is provided a set of liquid treatment cartridges according to the invention.

In an embodiment, at least one of the first end part, the middle part and the second end part of the housings of at least two of the liquid treatment cartridges are identically shaped and dimensioned and at least one of the first end part, the middle part and the second end part of the housings of these liquid treatment cartridges differ in terms of at least one of their shapes and dimensions.

This set of liquid treatment cartridges can be produced relatively economically from a limited number of constituent parts.

According to another aspect, the liquid treatment system according to the invention includes a filter head assembly and at least one liquid treatment cartridge according to the invention.

According to another aspect, the method of manufacturing a liquid treatment cartridge according to the invention is characterised by
providing a separate second end part, and
sealingly joining the second end part to the middle part at a second axial end of the middle part opposite the first axial end so as at least partially to close off the cartridge chamber at the second axial end.

The method can be adapted to manufacture differently sized liquid treatment cartridges or liquid treatment cartridges with different handling functionalities relatively easily.

In an embodiment, providing the middle part includes cutting the wall-forming part from a piece of extruded stock.

This embodiment allows the size of the liquid treatment cartridge, and thus its capacity, to be adapted in a relatively economical manner. Relatively little material is discarded.

The invention will be explained in further detail with reference to the accompanying drawings, in which:
Fig. 1 is a perspective view of a filter head assembly with a connected liquid treatment cartridge;
Fig. 2 is a perspective view of a first end part of a housing of the liquid treatment cartridge;
Fig. 3 is an exploded view of a first type of first end part and middle part of a liquid treatment cartridge;
Fig. 4 is an exploded view of a second type of first end part and middle part of a liquid treatment cartridge;
Fig. 5 is a cross-sectional view in assembled state of the second type of first end part and middle part of the liquid treatment cartridge of Fig. 4;
Fig. 6 is an exploded view of a first type of second end part and middle part of a liquid treatment cartridge;
Fig. 7 is a cross-sectional view in assembled state of the second end part and middle part shown in Fig. 6; and
Fig. 8 is a cross-sectional view of a second type of second end part and middle part of a liquid treatment cartridge.

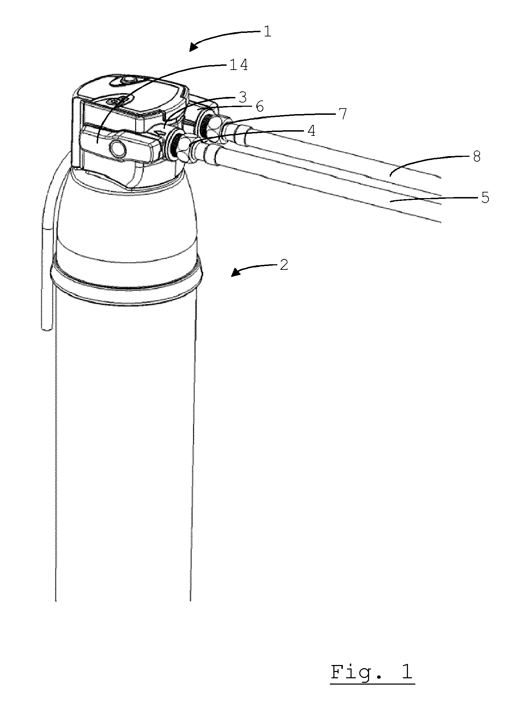

A liquid treatment system (Fig. 1) includes a filter head assembly 1 and a replaceable liquid treatment cartridge 2. By way of example, the liquid treatment system is a system for at least partially removing temporary (or carbonate) hardness from potable water. In a manner known *per se,* the liquid treatment cartridge 2 includes a liquid treatment medium (not shown in detail) including at least a cation exchange resin. In an embodiment, the cation exchange resin is a weakly acidic cation exchange resin that is at least initially in the hydrogen form. In use, hydrogen ions are exchanged for calcium and magnesium ions in the water. The hydrogen ions react with carbonate and hydrogen carbonate ions. When the liquid treatment cartridge 2 is exhausted, it is replaced by another one and sent back for recycling. The liquid treatment medium is removed from the liquid treatment cartridge 2 to be regenerated. A housing of the liquid treatment cartridge 2 is destroyed in the process, although the material thereof, generally a thermoplastic material, can be recycled. Cost-efficient manufacturing of the housing of the liquid treatment cartridge is therefore a concern.

The filter head assembly 1 includes an inlet connector 3 for connecting a connector 4 at the end of a supply conduit 5. The supply conduit 5 may be connected to the mains water supply for example.

The filter head assembly further includes an outlet connector 6 for connecting a connector 7 at the end of a delivery conduit 8 for delivering at least partially softened water to appliances such as dish washers, steam cookers, coffee makers and the like.

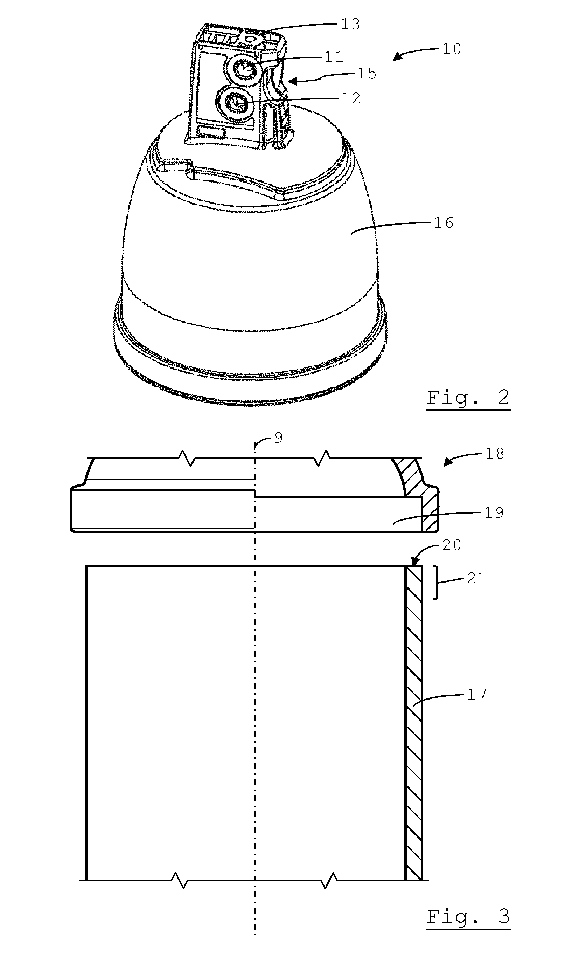

The housing of the liquid treatment cartridge 2 is made up of three basic parts, namely a first end part, a middle part and a second end part. The housing has an elongate shape, the first end part being located at a first axial end of the liquid treatment cartridge 2 and the second end part at an opposite axial end of the liquid treatment cartridge 2 relative to a longitudinal axis 9 (Figs. 3-8) thereof. Together, the first and second end parts and the middle part enclose at least one chamber, in which are arranged the liquid treatment medium and other components such as a fall tube, mechanical filters for retaining the liquid treatment medium etc.

A generic first end part 10 is shown in Fig. 2. Variants of this first end part 10 to be discussed with reference to Figs. 3-5 differ from one another only in the structure of an axial end section for joining the first end part 10 to the middle part.

But for components such as sealing rings, the first end part 10 is formed by a single monolithic component that completely closes off the chamber in the liquid treatment cartridge 2 at one axial end, except of course for openings forming ports 11,12 for leading water into or out of the chamber. Two inlet ports 11,12 are visible in Fig. 2, since the liquid treatment cartridge 2 is of the type provided with a bypass feature for blending essentially completely softened water with unsoftened water in a desired ratio determined by the settings of a valve in the filter head assembly 1. An outlet port (not visible in Fig. 2) is located on an opposite side of the protruding part 13 of the first end part 10.

The filter head assembly 1 is provided with parts (not shown) of a mechanical locking mechanism operated by a lever 14 (Fig. 1). These parts co-operate with locking features 15 on the protruding part 13 of the first end part 10. The locking mechanism locks the liquid treatment cartridge 2 in place when the protruding part 13 (Fig. 2) at a first end of the liquid treatment cartridge 2 has been correctly inserted into a recess of the filter head assembly. In this situation, a liquid-tight seal is provided between the inlet ports 11,12 of the liquid treatment cartridge 2 and co-operating outlet ports (not shown) of the filter head assembly.

The protruding part 13 is made of one piece with a remainder of the first end part 10, e.g. by injection-moulding. This single monolithic component further includes a part 16 shaped as a corresponding section of a dome (both on the internally and externally).

The middle part includes at least a cylindrical part 17 forming a wall closed on itself around the longitudinal axis 9 of the liquid treatment cartridge 2. This cylindrical part 17 radially delimits the cartridge chamber along the majority of its length, if not its entire length.

The cylindrical part 17 is an extruded part. In an embodiment, it is a thermoplastic part. In one embodiment, it is cut to the appropriate length from a piece of extruded stock. The length of the cylindrical part 17 determines the volume of the cartridge chamber, so that it is possible to manufacture cartridges 2 of different capacities simply by providing a cylindrical part 17 of the appropriate length.

This effect can also be achieved by providing an elongate part forming a wall closed on itself around the longitudinal axis and having a non-circular cross-section, of course.

A first type of first end part 18 (Fig. 3) has an axial end shaped to form a socket 19 into which the cylindrical part 17 can be inserted directly. Thus, there are no connecting parts. An axial end 20 of the cylindrical part 17 forms the corresponding axial end of the middle part. It is joined to the first end part 18 by means of a positive material joint along an end section 21 of the cylindrical part 17.

In one embodiment, the bond is formed by a food-grade adhesive applied to the end section 21 of the cylindrical part 17 and the socket 19. In another embodiment, thermal welding is used. In particular, one or both of the first end part 18 and the cylindrical part 17 can have an electrically conductive part embedded or applied to it prior to insertion of the end section 21 into the socket 19. The application of an electrical current causes the material of the cylindrical part 17 and the first end part 18 to melt and then coalesce to join the two together.

If the length of the cylindrical part 17 permits and the second end part is joined to the middle part after the first end part 18, then ultrasonic welding can be used to provide the positive material joint.

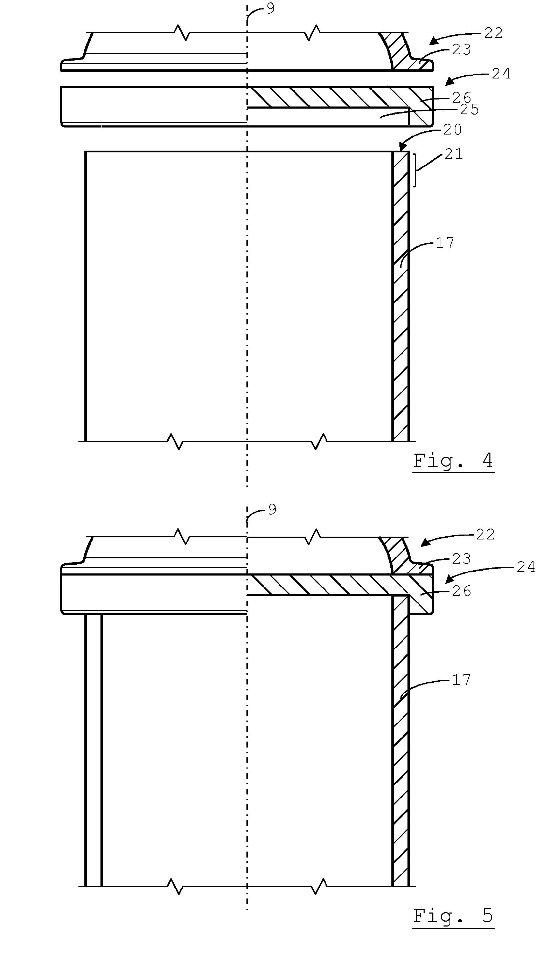

A second type of first end part 22 (Figs. 4,5) has an axial end shaped to form a radially outwardly extending flange 23. In addition to the cylindrical part 17, the middle part of the liquid treatment cartridge 2 includes a joining part 24 in this embodiment.

The joining part 24 is joined to the cylindrical part 17 before being joined to the first end part 22. The joining part 24 is provided with a socket 25 for receiving the end section 21 of the cylindrical part 17. A positive material joint is provided between the end section 21 and the socket 25.

Because the joining part 24 and the cylindrical part 17 are joined together before the middle part is joined to the first end part 22, welding, in particular ultrasonic welding, can be used to form the positive material joint. One of the anvil and sonotrode of an ultrasonic welding device can easily be inserted into the cylindrical part 17.

The joining part 24 is provided with a radially outwardly extending flange 26. This flange 26 can be joined to the flange 23 of the first end part 22 by means of a positive material joint, e.g. by ultrasonic welding. The parts of the flanges 26, 23 protruding radially beyond the radial extent of the cylindrical part 17 and the dome-shape part 16 of the first end part 22, respectively, provide purchase for the anvil and sonotrode of an ultrasonic welding device. Even if a different type of joint is used, a relatively large contact area is provided.

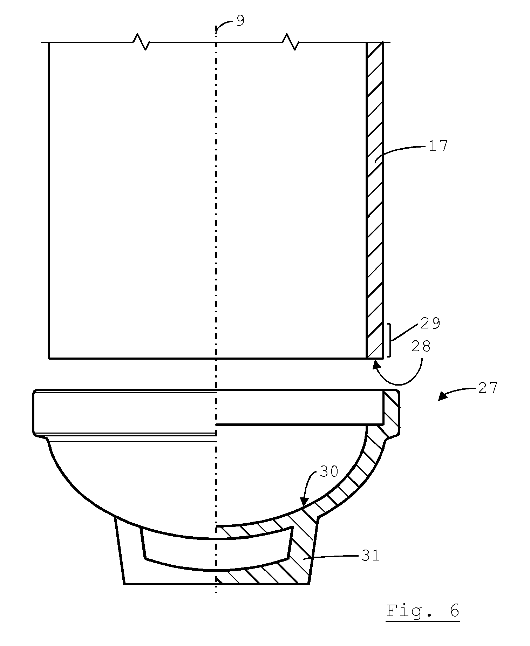

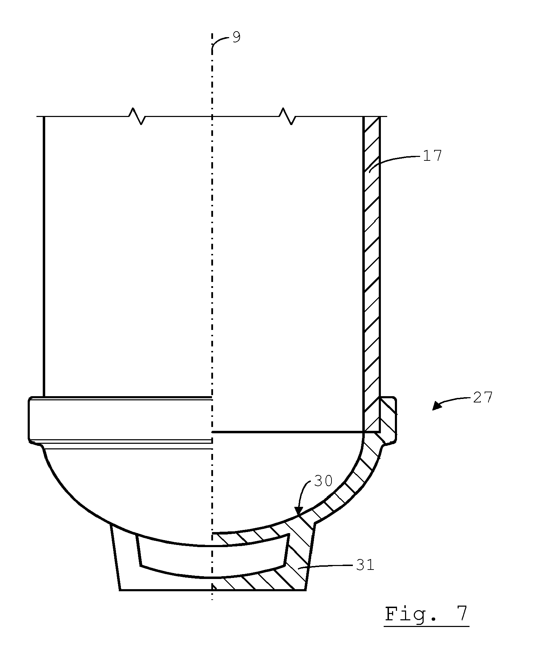

A first type of second end part 27 (Figs. 6 and 7) is joined directly to the cylindrical part 17 at an opposite axial end 28 to the first axial end 20. It completely closes off the chamber in the liquid treatment cartridge 2 at the opposite axial end to the axial end of the liquid treatment cartridge 2 configured for connection to the filter head assembly. The second end part 27 is provided with a socket into which an end section 29 of the cylindrical part 17 is insertable such that a radially outwardly-facing surface of the end section 29 lies against a radially inwardly-facing surface of the socket. A positive material joint is formed at this interface, e.g. by means of a food-grade adhesive or welding, in particular ultrasonic or thermal welding. The latter can be achieved using embedded or applied electrically conducting wires or similar structures as set out above in connection with the welding of the cylindrical part 17 to the first end part 18 of the first type.

The second end part 27 is a single monolithic component, e.g. obtainable by injection-moulding a thermoplastic material. An inner surface 30 delimits the cartridge chamber and, seen from the chamber, is concave in shape. The second end part 27 further includes an integral handle 31 with which the liquid treatment cartridge 2 can be pulled out of the filter head assembly 1 when it needs to be replaced. The second end part 27 of the first type is thus useful where the axial end of the liquid treatment cartridge 2 at which it is provided is a free end and there is space for pulling the liquid treatment cartridge 2 from a filter head assembly 1 fixed in position, from which it may be suspended, in use.

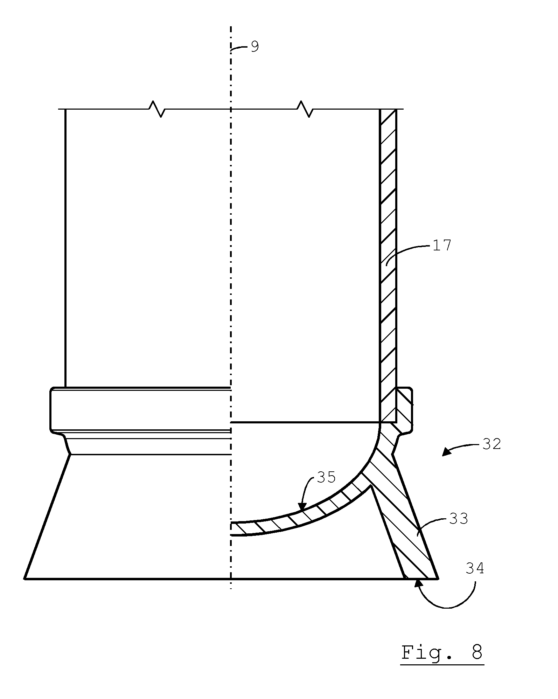

If the weight of the liquid treatment cartridge 2 does not permit suspension from the filter head assembly 1, then a second end part 32 of a second type (Fig. 8) can be provided instead. This second end part 32 is also a single monolithic component, obtainable by injection-moulding a thermoplastic material. Like the second end part 27 of the first type, it is provided with a socket into which the end section 29 of the cylindrical part 17 is insertable such that a radially outwardly-facing surface of the end section 29 lies against a radially inwardly-facing surface of the socket. A positive material joint is formed at this interface, e.g. by means of a food-grade adhesive or welding, in particular ultrasonic or thermal welding. The latter can be achieved using embedded or applied electrically conducting wires or similar structures as set out above in connection with the welding of the cylindrical part 17 to the first end part 18 of the first type.

An integral moulded part of the second end part 32 of the second type is a pedestal 33 providing a support surface 34 in a plane perpendicular to the longitudinal axis 9 for supporting the liquid treatment cartridge 2 on a floor. In this embodiment, the filter head assembly 1 is supported by the liquid treatment cartridge 2 and the conduits 5,8 are flexible enough to allow the filter head assembly 1 to be lifted off the liquid treatment cartridge 2.

The second end part 32 of the second type is also provided with an inner surface 35 delimiting the chamber in the liquid treatment cartridge 2. The inner surface 35 is concave, seen from the chamber.

In a method of manufacturing a set of liquid treatment cartridges 2 end parts of one of the first and second types are used. If those of the second type are used, then a joining part 24 is retrieved for each liquid treatment cartridge and joined to the cylindrical part 17 before or after a selected one of the second end parts 27,32 is joined to the cylindrical part 17.

With the selected second end part 27,32 joined to the cylindrical part 17, the contents of the chamber in the liquid treatment cartridge 2 are inserted. Optionally, one or more separate components of the first end part 18,22 are connected, and then the first end part 18,22 is joined to the middle part.

In an alternative embodiment, the second end part 27,32 is joined to the middle part last, the liquid treatment cartridge 2 being filled with internal components including the liquid treatment medium in an upside-down state.

Within the set of liquid treatment cartridges, at least one of the length of the cylindrical part 17 and the choice of second end part 27,32 differ between two cartridges 2, so that the capacities and/or the handling functionalities also differ. The manufacturer need only stock the second end parts 27,32 and either a range of different lengths of extruded cylindrical parts 17 or a cylindrical piece of stock from which the cylindrical part 17 is cut at a relatively late stage. In either case, there is flexibility to adapt the size of production runs of different types of cartridge housing according to the current order situation.

The invention is not limited to the embodiments described above, which may be varied within the scope of the accompanying claims.

For instance, variants of the second end parts 27,32 provided with radially outwardly projecting flanges are conceivable. In embodiments of the liquid treatment cartridge 2 using such variants, there may be a joining part 24 at either axial end of the cylindrical part 17.

Instead of providing a positive material joint between the middle part and the first and/or the second end part, the middle part and the end part concerned can be screwed together and/or clipped together to provide an irreversible shape lock.

### LIST OF REFERENCE NUMERALS

- 1 -: Filter head assembly
- 2 -: Liquid treatment cartridge
- 3 -: Inlet connector
- 4 -: Connector at end of supply conduit
- 5 -: Supply conduit
- 6 -: Outlet connector
- 7 -: Connector at end of delivery conduit
- 8 -: Delivery conduit
- 9 -: Longitudinal axis
- 10 -: Generic first end part
- 11 -: 1^{st} Inlet port
- 12 -: 2^{nd} Inlet port
- 13 -: Protruding part of first end part
- 14 -: Lever
- 15 -: Locking features
- 16 -: Part shaped as a section of a dome
- 17 -: Cylindrical part
- 18 -: First end part of 1^{st} type
- 19 -: Socket of first end part
- 20 -: Axial end of cylindrical part
- 21 -: 1^{st} End section
- 22 -: First end part of second type
- 23 -: Flange of first end part
- 24 -: Joining part
- 25 -: Socket of joining part
- 26 -: Flange of joining part
- 27 -: Second end part of 1^{st} type
- 28 -: Second axial end of cylindrical part
- 29 -: 2^{nd} End section of cylindrical part
- 30 -: Inner surface
- 31 -: Handle
- 32 -: Second end part of 2^{nd} type
- 33 -: Pedestal
- 34 -: Support surface
- 35 -: Inner surface

## Claims

1. Liquid treatment cartridge for removable connection to a filter head assembly (1), the cartridge having at least one liquid inlet (11,12) and at least one liquid outlet for connection to the filter head assembly (1) at one axial end of the liquid treatment cartridge, relative to a body axis (9) of the liquid treatment cartridge,
wherein the liquid treatment cartridge includes a housing including:
a middle part including a part (17) forming a wall closed on itself around the body axis (9) to delimit at least part of a cartridge chamber,
a first end part (10;18;22), wherein the first end part (10;18;22) and the middle part are discrete housing components sealingly joined at a first axial end (20;24) of the middle part; and
a second end part (27;32) at least partially closing off the cartridge chamber at a second axial end (28) of the middle part opposite the first end (20;24), **characterised in that**
the middle part and the second end part (27;32) are discrete housing components sealingly joined at the second axial end (28) of the middle part.

2. Liquid treatment cartridge according to claim 1, wherein, in at least one axial end section (21,29) of the wall, any change in radial distance of the wall to the body axis (9) in axial direction is uniform along its circumference.

3. Liquid treatment cartridge according to claim 1 or 2,
wherein a cross-section of at least one axial end section (21,29) of the wall is essentially invariant in axial direction.

4. Liquid treatment cartridge according to claim 3,
wherein the cross-section of the wall is essentially invariant in axial direction along its length.

5. Liquid treatment cartridge according to any one of the preceding claims, wherein the wall-forming part (17) is obtainable from a piece of extruded stock.

6. Liquid treatment cartridge according to any one of the preceding claims,
wherein at least one of the ends (21,29) of the middle part is received in a socket of a respective one of the first and second end parts (10;18;22;27;32).

7. Liquid treatment cartridge according to any one of the preceding claims,
wherein the middle part is joined to at least one of the first and second end parts (10;18;22;27;32) by means of a positive material joint.

8. Liquid treatment cartridge according to any one of the preceding claims,
wherein at least one axial end of the middle part is formed by an axial end (20,28) of the wall-forming part (17).

9. Liquid treatment cartridge according to claim 8,
wherein the wall-forming part (17) constitutes the middle part.

10. Liquid treatment cartridge according to any one of the preceding claims,
wherein the second end part (27;32) comprises a single monolithic part closing off the cartridge chamber at the second end (28) of the middle part.

11. Set of liquid treatment cartridges according any one of claims 1-10.

12. Set of liquid treatment cartridges according to claim 11, wherein at least one of the first end part (10;18;22), the middle part and the second end part (27;32) of the housings of at least two of the liquid treatment cartridges are identically shaped and dimensioned and at least one of the first end part (10;18;22), the middle part and the second end part (27;32) of the housings of these liquid treatment cartridges differ in terms of at least one of their shapes and dimensions.

13. Liquid treatment system, including a filter head assembly (1) and at least one liquid treatment cartridge (2) according to any one of claims 1-10.

14. Method of manufacturing a liquid treatment cartridge (2) for removable connection to a filter head assembly (1), for example a liquid treatment cartridge (2) according to any one of claims 1-10, the cartridge having at least one liquid inlet (11,12) and at least one liquid outlet for connection to the filter head assembly at one axial end thereof, relative to a body axis (9) of the liquid treatment cartridge (2),
wherein a housing of the liquid treatment cartridge (2) is made by at least:
providing a middle part including a part (17) forming a wall closed on itself around the body axis (9) to delimit at least part of a cartridge chamber;
providing a first end part (10;18;22), separate from the middle part; and
sealingly joining the first end part (10;18;22) to the middle part at a first axial end (20;24) of the middle part, **characterised by**
providing a separate second end part (27;32), and
sealingly joining the second end part (27;32) to the middle part at a second axial end (28) of the middle part opposite the first axial end (20;24) so as at least partially to close off the cartridge chamber at the second axial end (28).

15. Method according to claim 14,
wherein providing the middle part includes cutting the wall-forming part (17) from a piece of extruded stock.
